(19) Europäisches Patentamt
European Patent Office
Office européen des brevets

(11) Publication number: **0 031 964**
**B1**

(12) # EUROPEAN PATENT SPECIFICATION

(45) Date of publication of patent specification: **05.03.86**

(51) Int. Cl.$^4$: **C 08 F 263/02**, C 08 F 2/22, C 08 F 265/04

(21) Application number: **80108226.4**

(22) Date of filing: **27.12.80**

(54) **Sequential emulsion polymerization process for structured particle latex products.**

(30) Priority: **02.01.80 US 108973**

(43) Date of publication of application:
**15.07.81 Bulletin 81/28**

(45) Publication of the grant of the patent:
**05.03.86 Bulletin 86/10**

(84) Designated Contracting States:
**DE FR GB IT NL**

(56) References cited:
**FR-A-1 211 385**
**FR-A-2 121 007**
**GB-A-1 178 016**
**US-A-2 566 251**
**US-A-2 741 650**
**US-A-3 297 621**

**CHEMICAL ABSTRACTS, vol. 73, no. 16, 19th October 1970, page 73, abstract 78631h, COLUMBUS OHIO (US)**

(73) Proprietor: **THE DOW CHEMICAL COMPANY**
**2030 Dow Center Abbott Road P.O. Box 1967**
**Midland, MI 48640 (US)**

(72) Inventor: **Ishikawa, Tadayoshi**
**191-176, Kozono, Ayase City**
**Kanagawa Prefecture (JP)**
Inventor: **Lee, Do Ik**
**5109 Nakoma Drive**
**Midland State of Michigan 48640 (US)**

(74) Representative: **Hann, Michael, Dr.**
**Marburger Strasse 38**
**D-6300 Giessen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 031 964 B1

Courier Press, Leamington Spa, England.

**Description**

This invention relates to a process for the preparation of stable, aqueous synthetic copolymer latexes and to the aqueous copolymer latexes produced thereby.

A wide variety of latexes including styrenebutadiene copolymers, acrylic homopolymers and copolymers, vinylidene chloride homopolymers and copolymers, etc. have been developed for uses as coatings, adhesives, and impregnants. However, many desirable characteristics have not been attained because of incompatibility between monomers materials and wide divergency of reactivity.

In accordance with the present invention, an improved process is provided for preparing an aqueous copolymer latex of colloidally dispersed, substantially spheroidal heterogeneous copolymer particles by

(A) first preparing an initial aqueous latex of a substantially linear hydrophilic polymer by emulsion polymerizing an initial monomer charge comprising (1) one or more vinyl esters of a non-addition polymerizable carboxylic acid and/or one or more esters of an addition polymerizable carboxylic acid and (2) one or more relatively hydrophilic comonomers having a solubility in water of at least 3 weight percent on a total weight basis at 25°C with the proviso that when the monomer component (A) (1) is exclusively vinyl acetate comonomer (2) can be eliminated; and

(B) thereafter emulsion polymerizing, in the presence of the initial hydrophilic polymer latex of stage (A) a second relatively hydrophobic monomer charge.

This process is characterized in that

(a) in stage (A) the relatively hydrophilic comonomers are used in an amount which renders the copolymer of said initial latex sufficiently hydrophilic that it ultimately becomes preferentially oriented towards the outer surface of the finished copolymer particles of the final copolymer latex product,

(b) the polymerization is performed in both polymerization stages (A) and (B) at a pH from 2 to 6,

(c) in polymerization stage (B) from 5 to 50 parts by weight on a polymer solids basis of the initial hydrophilic polymer latex of stage (A) and from 50 to 95 parts by weight of the relatively hydrophobic monomer charge is used,

thus obtaining copolymer particles which are individually composed of a relatively hydrophobic polymer core portion having a relatively hydrophilic polymeric portion preferentially oriented toward the outer surface thereof.

U.S.—A—2,566,251 describes homogeneous copolymers of aliphatic conjugated diolefin hydrocarbons with polymerizable vinyl esters. Such homogeneous copolymers are prepared in a two stage process in which in the first stage the vinyl ester, e.g. vinyl acetate, is polymerized alone in aqueous emulsion, and in the second stage the diolefin is polymerized in the presence of the aqueous dispersion of the vinyl ester. With regard to the pH during the emulsion polymerization the single statement appears in Example 1 for the homopolymerization of vinyl acetate in the first stage. It is stated that the pH of the aqueous phase should be adjusted to pH 7. The homogeneous copolymers prepared by this process contain from 99 to 50 percent by weight of vinyl ester and from 1 to 50 percent by weight of diolefin.

The process of the invention is particularly advantageous for preparing aqueous polymer latexes composed of otherwise incompatible monomeric ingredients. Also it provides exceptional flexibility in the design and manufacture of synthetic polymer latex having diverse chemical and/or mechanical properties using conventional emulsion polymerization techniques.

The dispersed polymer particles of the latex are broadly characterized as generally heterogeneous and structured, having a revatively hydrophobic polymer domain and one or more relatively hydrophilic polymer domains.

As used herein, the term "domain" refers to discrete regions within the dispersed polymer particle of either the hydrophobic polymer or hydrophilic polymer.

The distribution of the hydrophilic and hydrophobic polymer domains within the dispersed polymer particles is generally such that the particle has a relatively hydrophobic central portion or core and one or more relatively hydrophilic portions preferentially oriented toward the outer surface. Such particles can be conveniently envisioned as being composed of a generally spheroidal, hydrophobic core portion which is either totally or partially surrounded or encapsulated by an encompassing shell of the hydrophilic polymer or which has several discrete regions of such hydrophilic polymer on the surface thereof.

The size of the dispersed polymer particles can vary. However, such particles generally have an average diameter of from 0.08 to 0.5, preferably from 0.1 to 0.3, micrometer.

In preparing the aqueous polymer latexes of the invention, an initial latex of a substantially linear hydrophilic polymer is first prepared via emulsion polymerization techniques and thereafter a major proportion, e.g. from 50 to 95, preferably from 75 to 95, and most preferably from 80 to 90, parts by weight of a relatively hydrophobic monomer charge is emulsion polymerized in the presence of a minor portion, e.g. from 5 to 50, preferably from 5 to 25, and most preferably from 10 to 20, parts by weight on a polymer solids basis of such initial hydrophilic polymer latex.

Monomeric ingredients advantageously employed in the preparation of the initial hydrophilic polymer latexes include (1) one or more vinyl esters of a non-addition polymerizable carboxylic acid and/or one or more esters of an addition polymerizable carboxylic acid and (2) optionally in the case of vinyl acetate but otherwise as a necessary and required feature, at least one relatively hydrophilic monomer which is

addition copolymerizable therewith. Thus, for example, suitable initial hydrophilic polymer latexes for use in the present invention include (a) emulsion copolymerization products of one or more relatively hydrophilic monomers such as monoethylenically unsaturated carboxylic acid and/or the various amide-, aldehyde-, glycidyl-, hydroxyalkyl-containing derivatives thereof with one or more vinyl esters of a non-addition polymerizable carboxylic acid and/or with one or more saturated aliphatic esters of a monoethylenically unsaturated carboxylic acid as well as (b) homopolymerized polyvinyl acetate.

Suitable vinyl esters for use in the aforementioned hydrophilic polymer latexes are those which do not impart substantial cross-linking to the resulting hydrophilic polymer. Accordingly, the vinyl ester monomers typically employed are those vinyl esters in which the acid component is not readily addition polymerizable and such vinyl esters thus include those of aromatic and saturated aliphatic (e.g., alkanoic) carboxylic acids. Vinyl esters of particular interest in the practice of this invention are those of saturated aliphatic or aromatic acids which contain 2 to 8 carbon atoms such as, for example, vinyl acetate, vinyl propionate, vinyl butyrate, vinyl-2-ethylhexoate, and vinyl benzoate. Vinyl acetate and vinyl propionate are especially desirable.

The amount of vinyl ester monomer employed in the hydrophilic polymer latex can vary somewhat depending upon the intended end-use of the final polymer latex. Thus, for example, when vinyl acetate is employed as the vinyl ester component, it can generally be employed in amounts ranging from 0 to 100 (preferably 0 to 99) weight percent based upon the total weight of the monomer charge employed to prepare the hydrophilic polymer latex. However, with other vinyl ester monomers, the amount employed is generally in the range of 0 to 99 (preferably 0 to 97) weight percent based upon the total monomer charge for such hydrophilic polymer latex. It is sometimes preferable (for in certain end-use applications such as adhesives and paper coating compositions) that the vinyl ester constitutes from 20 to 85 (especially from 20 to 60) weight percent of the monomer charge for the hydrophilic copolymer latex.

Suitable esters of addition polymerizable carboxylic acids for use in the hydrophilic latexes are those which do not impart substantial cross-linking to the resulting hydrophilic polymer. Typical are esters of an addition polymerizable carboxylic acid such as an ester of a mono- or polyhydric aromatic or aliphatic alcohol and a monoethylenically unsaturated carboxylic acid. Of particular interest are $C_2$ to $C_4$ hydroxyalkyl and $C_1$ to $C_8$ alkyl esters of addition polymerizable monoethylenically unsaturated carboxylic acids such as 2-hydroxyethyl acrylate, 3-hydroxypropyl acrylate, methyl acrylate, methyl methacrylate, ethyl acrylate, ethyl methacrylate, 2-chloroethyl methacrylate, propyl acrylate or methacrylate, n-butyl acrylate or methacrylate, and 2-ethylhexyl acrylate.

The amount of ester employed in preparing the hydrophilic copolymer latex is not critical so long as it does not prevent the resulting hydrophilic polymer from becoming preferentially oriented toward the outer surface of the dispersed latex polymer particle. With relatively soft and hydrophilic monomers such as methyl, ethyl or propyl acrylate, such monomers are suitably employed in amounts ranging from 0 to 99 weight percent based upon the total weight of the monomer charge. However, for less hydrophilic, harder monomers the maximum amount is somewhat lower than 99 weight percent figure. For example, with methyl methacrylate, the amount employed in preparing the initial hydrophilic polymer latex is typically from 0 to 85 weight percent of the initial monomer charge. Similarly, for a more hydrophobic monomer such as n-butyl acrylate, or 2-ethylhexyl acrylate, the amount is advantageously in the range of from 0 to 90 or 95 weight percent of the monomer charge.

As is indicated above the hydrophilic polymer latex is prepared by emulsion copolymerizing at least one vinyl ester or addition polymerizable carboxylic acid ester monomer with at least one hydrophilic monomer which has a solubility in water of at least about 3 weight percent at 25°C. Preferably, such hydrophilic monomer is a monoethylenically unsaturated carboxylic acid, especially a monobasic, monoethylenically unsaturated carboxylic acid containing from 3 to 10 carbon atoms such as, acrylic acid, methacrylic acid, crotonic acid, haloacrylic acids 2-chloroacrylic acid, 2-bromoacrylic acid, 3-chloroacrylic acid, 2,3-dichloroacrylic acid, 3,3-dichloroacrylic acid, 2-phenylacrylic acid, 3-phenylacrylic acid, vinyl benzoic acid, and isopropenyl benzoic acid. However, relatively hydrophilic (e.g., amide-, aldehyde-, glycidyl-, hydroxy alkyl-, etc., containing) derivatives of such monoethylenically unsaturated carboxylic acids can also be suitably employed. Examples of such suitable hydrophilic derivatives include acrylamide, methacrylamide, acrolein, methacrolein, glycidyl acrylate and methacrylate, and hydroxyethyl acrylate. Similarly, monoethylenically unsaturated dicarboxylic acids such as fumaric, itaconic, or maleic acid can also be beneficially employed as the hydrophilic monomer component, particularly in combination with one or more monobasic carboxylic acid monomers. The preferred acid monomers are those having from 3 to 5 carbon atoms, most preferably acrylic or methacrylic acid.

The amount of relatively hydrophilic monomer employed is not critical provided that it is (a) enough to render the first stage polymer suitably hydrophilic to be ultimately located at or near the outer surface of the dispersed latex polymer particles, but (b) not enough to cause the resulting polymer to be completely soluble in aqueous medium under acidic or neutral conditions. Accordingly, the actual content will depend largely upon the particular comonomer, or combination of comonomers, selected as well as the identity of the hydrophilic monomer itself. When the hydrophilic monomer is primarily vinyl acetate, then it will generally constitute from 0 to 30 (typically from 0 to 10, and preferably from 1 to 10, in the case of a binary vinyl acetate/carboxylic acid copolymer) weight percent of the hydrophilic stage monomer charge. However, when substantial portions of a more hydrophobic or harder comonomer is employed, then larger

quantities are generally employed. For example, when ethyl acrylate or vinyl propionate is employed in the first stage hydrophilic copolymer latex, the amount of hydrophilic monomer employed typically constitutes from 3 to 30 weight percent of the monomer charge thereof. With more hydrophobic acrylate or methacrylate esters (e.g., n-butyl acrylate, 2-ethylhexyl acrylate, etc.) the hydrophilic monomer component will generally constitute from 5 to 50 weight percent of the first hydrophilic copolymer. Similarly, when substantial amounts of a relatively hard comonomer such as methyl methacrylate, styrene, or acrylonitrile are employed, the hydrophilic comonomer component will generally constitute from 10 or 15 to 50 weight percent of the first stage latex monomer charge.

In addition the monomer charge employed to form the hydrophilic first stage polymer latex can also optionally contain one or more other addition copolymerizable monomers. Examples of such optional monomers include nitriles of the monoethylenically unsaturated carboxylic acids such as acrylonitrile and methacrylonitrile as well as monovinylidene aromatic monomers and vinylidene halide monomers. The amount of such optional monomers is not critical so long as the first stage latex is not too hydrophilic or too hydrophobic in terms of required solubility and orientation parameters noted above. Thus, while the total amount of optional monomers may range from 0 to 50 weight percent, it is generally preferable to employ from 0 to 20 and especially 0 to 10 weight percent based upon the total weight of the monomer charge for the first stage hydrophilic polymer latex.

In a preferred embodiment of the present invention, the dispersed latex polymer particles also have incorporated therein certain reactive or functional modifying monomers to render the final polymer latex reactive or curable. Accordingly, there may optionally also be employed a minor portion (e.g., from 0 to 20, preferably from 0.5 to 20, and most preferably from 5 to 15, weight percent based on the monover charge for such first stage latex) of one or more addition polymerizable modifying monomers such as N-alkylol acrylamide or methacrylamide (e.g., N-methyloyl acrylamide or methacrylamide); N-alkyloxyalkyl acrylamide or methacrylamide (e.g., N-isobutoxymethyl acrylamide or methacrylamide); glycidyl acrylate or methacrylate; acrolein or methacrolein; and isopropenyl oxazoline. When such modifying monomers are relatively hydrophilic in character (e.g., N-alkylol acrylamide or methacrylamide, N-alkyloxyalkyl acrylamide or methacrylamide, glycidyl acrylate or methacrylate, acrolein or methacrolein, etc.), they can serve the dual purpose of providing the requisite hydrophilicity to the first stage polymer latex as well as imparting reactive or functional character.

The preparation of the first stage hydrophilic copolymer latexes is conveniently by emulsion polymerization in acidic aqueous medium. Thus, for example, the monomer charge is dispersed in an acidic aqueous medium with 0.5 to 5 weight percent (based upon the monomer charge) of a conventional anionic and/or nonionic emulsifier such as potassium n-dodecyl sulfonate, sodium isooctylbenzene sulfonate, sodium laurate, or a nonylphenol ether of polyethylene glycol and thereafter polymerized at a temperature of 50° to 110°C, preferably 70° to 90°C, and a pH of about 2 to 6, preferably 2 to 5, and especially from 2 to 4.

Conventional emulsion polymerization catalysts can be employed including peroxides, persulfates, and azo compounds such as sodium persulfate, potassium persulfate, ammonium persulfate, hydrogen peroxide, t-butyl hydroperoxide, cumene hydroperoxide, azodiisobutyric diamide as well as redox catalysts activated in the water phase by a water-soluble reducing agent. Typically, such catalysts are employed in an amount ranging from 0.01 to 5 weight percent based upon the monomer weight.

Similarly, conventional chain transfer agents such as n-dodecyl mercaptan, bromoform, and carbon tetrachloride can also be employed in the normal fashion to regulate the molecular weight of the polymer. Typically, such chain transfer agents are used in amounts ranging from 0.01 to 5 (preferably from 0.1 to 1) weight percent based on the weight of the monomer in the first stage polymerization.

Following the initial polymerization stage in which the hydrophilic polymer latex is prepared, a second polymerization stage is conducted in which a major portion, e.g. from 50 to 95, preferably from 75 to 95 and most preferably from 80 to 90, parts by weight of a relatively hydrophobic monomer charge is emulsion polymerized in the presence of a minor proportion, e.g. from 5 to 50, preferably from 5 to 25 and most preferably from 10 to 20, parts by weight on a polymer solids basis of the initial hydrophilic polymer latex.

Monomers advantageously employed in the relatively hydrophobic, second stage monomer charge include aliphatic conjugated diene monomers, monovinylidene aromatic monomers, and vinylidene halides and mixtures thereof.

Typical aliphatic conjugated diene monomers contain from 4 to 9 carbon atoms and include such monomers as 1,3-butadiene, 2-methyl-1,3-butadiene, 2,3-dimethyl-1,3-butadiene, pentadiene, 2-neopentyl-1,3-butadiene and other hydrocarbon analogs of 1,3-butadiene, and, in addition, substituted 1,3-butadienes such as 2-chloro-1,3-butadiene, and 2-cyano-1,3-butadiene; substituted straight conjugated pentadienes; straight and branched chain conjugated hexadienes; and mixtures thereof. The 1,3-butadiene monomers provide polymers having particularly desirable properties and are therefore preferred.

Monovinylidene aromatic monomers useful in the second stage hydrophobic monomer charge include those monomers wherein a radical of the formula:

$$CH_2{=}\overset{\displaystyle R}{\overset{|}{C}}-$$

where R is hydrogen or a $C_1$—$C_4$ alkyl group, is attached directly to an aromatic nucleus containing from 6 to 10 carbon atoms, including those with alkyl or halogen substituents. Typical of these monomers are styrene; a-methylstyrene; ortho-, meta- and para-methylstyrene; ortho-, meta- and para-ethylstyrene; o,p-dimethylstyrene; o,p-diethylstyrene; isopropylstyrene; o-methyl-p-isopropylstyrene; p-chlorostyrene; p-bromostyrene; o,p-dichlorostyrene; o,p-dibromostyrene; vinylnaphthalene; diverse vinylalkylnaphthalenes and vinylhalonaphthalenes and mixtures thereof. Styrene and vinyltoluene are preferred and styrene is especially preferred as the monovinylidene aromatic monomer.

In addition the second stage monomer charge can also optionally contain minor proportions of other addition copolymerizable monomers such as from 0 to 20 weight percent of vinyl halide monomers such as vinyl chloride, etc.; acrylonitrile or methacrylonitrile $C_1$ to $C_8$ alkyl or $C_2$ to $C_4$ hydroxyalkyl esters of a $C_3$—$C_{10}$ monoethylenically unsaturated carboxylic acids. Especially desirable is from 0 to 10, and more preferably from 0 to 5, weight percent of a $C_2$ to $C_4$ hydroxyalkyl ester and/or from 0 to 10 and preferably from 0 to 5 weight percent of the $C_3$—$C_{10}$ monoethylenically unsaturated carboxylic acid itself.

Of particular interest as the second stage hydrophobic monomer charge are those comprising from 20 to 100 and especially from 20 to 75 weight percent of the monovinylidene aromatic or vinylidene halide monomer (especially the monovinylidene aromatic monomer) and/or from 25 to 100 and especially from 25 to 80 weight percent of the aliphatic conjugated diene monomer and from 0 to 10 and especially from 0 to 5 weight percent of the monoethylenically unsaturated carboxylic acid monomer.

The polymerization of the relatively hydrophobic second stage monomer charge is also conveniently conducted by conventional emulsion polymerization techniques in the presence of the dispersed hydrophilic first stage copolymer particles.

Thus the second stage hydrophobic monomer charge is typically dispersed, with agitation and 0.5 to 5 weight percent based on monomer charge of the conventional anionic and/or nonionic emulsifier, in an acidic aqueous medium containing the first stage, relatively hydrophilic polymer latex. It is thereafter polymerized at a temperature from 50° to 110°C, preferably from 70° to 90°C at a pH of from 2 to 6, preferably from 2 to 5 and especially from 2 to 4 using conventional emulsion polymerization catalysts and chain transfer agents typically in an amount ranging from 0.01 to 5, especially 0.1 to 1 weight percent based upon the weight of the second stage monomer charge.

Following completion of the second stage polymerization, the solids content of the resulting copolymer latex can be adjusted to the level desired by adding or removing water. Generally, however, the desired polymer solids content will be from 20 to 65 and preferably from 30 to 60 weight percent on a total weight basis. Such solids content can usually be obtained directly without further adjustment.

The resulting two stage latexes can be advantageously employed in a wide variety of end-use applications, e.g., in coating formulations such as paints and pigmented paper coating compositions; in adhesive compositions; and as impregnants.

To further illustrate the present invention, the following examples are presented. All parts and percentages are on a weight basis unless otherwise specified.

Examples 1 and 2

Styrene/Butadiene monomer mixture (60/40 ratio) emulsion polymerized in the presence of a 90/10 ethyl acrylate/methacrylic acid copolymer latex

Example 1

In this example, an initial 90/10 weight ratio ethyl acrylate (EA)/methacrylic acid (MAA) copolymer latex is first prepared via emulsion polymerization and thereafter 80 parts of a 60/40 weight ratio styrene/butadiene monomer mixture is emulsion polymerized in the presence of 20 parts (on a polymer solids basis) of such EA/MAA copolymer latex.

A. In the preparation of the EA/MAA copolymer latex, the 90/10 weight ratio EA/MAA comonomer charge is continuously added, with stirring and over a two-hour period, to about 150 parts by weight (per 100 parts by weight of the comonomer charge) of an initial aqueous medium containing 0.02 part by weight of the pentasodium salt of diethylenetriaminepentaacetic acid and 1 part by weight of sodium dodecyldiphenyl ether disulfonate. In addition, an aqueous stream containing (based upon 100 parts by weight of the EA/MAA comonomer charge) 40 parts of deionized water, 0.5 part of sodium dodecyldiphenyl ether disulfonate, 0.5 part sodium persulfate and 0.1 part sodium hydroxide is added over a 2 1/2-hour period commencing 1/4 hour earlier than the start of the indicated EA/MAA monomer charge.

The EA/MAA polymerization is conducted at 80°C during the course of the aforementioned 2 1/2-hour aqueous stream addition and for an additional 1-hour "cookdown" period thereafter. Upon completion of such cookdown period, the resulting EA/MAA copolymer latex is found to have a total solids content of about 35 weight percent, a pH of about 3.6, an average particle size of about 0.1 µm at pH 4.0 and the degree of conversion monomer to polymer is found to be approximately 99 percent.

B. Following the EA/MAA polymerization, 80 parts by weight of a 60/40 weight ratio styrene/butadiene monomer charge is emulsion polymerized in a second polymerization stage in the presence of 20 parts by weight, on a polymer solids basis, of the 90/10 EA/MAA copolymer latex. In such second stage polymerization, the indicated 80 parts of 60/40 weight ratio styrene/butadiene comonomer charge is continuously added with stirring over a 4-hour period to an aqueous medium containing (1) about 85 parts water, (b) 20 parts (polymer solids basis) of the above-described EA/MAA copolymer latex, (c) 0.01 part of

the pentasodium salt of diethylenetriaminepentaacetic acid and (d) 0.1 part of sodium dodecyldiphenyl ether disulfonate. In addition, an aqueous stream containing 40 parts of deionized water, 0.7 part of sodium dodecyldiphenyl ether disulfonate, 0.7 part of sodium persulfate and 0.15 part of sodium hydroxide is also added over a 5-hour period commencing at the same time as the start of the styrene/butadiene monomer feed and continuing for an additional hour following completion of such monomer feed.

The styrene/butadiene polymerization is conducted at 90°C over a 6-hour period including a 5-hour aqueous feed period and an additional 1-hour "cookdown" period. The resulting polymer latex is found to have a polymer solids content of about 45 weight percent, a pH of about 5.0, an average particle size of about 0.16 μm and a minimum film-forming temperature of 56°C. In addition, the EA/MAA first stage copolymer is confirmed to be preferentially oriented toward the surface of the resulting polymer latex particle as evidenced by (a) the relatively high minimum film-forming temperature exhibited thereby, (b) the presence of acid functionality at the surface of the particles therein as determined by potentiometric titration thereof, (c) the free-film tensile strength and elongation performance thereof, (d) the pH effect under alkaline conditions on the viscosity of such latex (i.e., substantially higher viscosity at pH 8.5 than at pH 4.0) and (e) the electron micrographs of osmium tetraoxide-stained particle cross-sections.

Example 2

Example 1 is repeated except that, in the EA/MAA polymerization step, 1 part bromoform (per 100 parts of the EA/MAA monomer charge) is added along with the EA/MAA monomer charge as a chain transfer agent in order to lower the molecular weight of the EA/MAA copolymer produced therein.

The resulting two stage latex ultimately produced generally resembles that of Example 1 except that it has (a) a relatively lower minimum film-forming temperature (i.e., 36°C versus 56°C for Example 1), (b) a somewhat larger apparent particle size than the latex of Example 1 by virtue of somewhat higher degree of swelling for the lower molecular weight outer EA/MAA copolymer layer and (c) lower tensile strength (1316 lb/in$^2$; 92.5 kg/cm$^2$) and higher elongation (423 percent) for the free films formed therefrom relative to the corresponding tensile strength of 1569 lb/in$^2$ (110.3 kg/cm$^2$) and elongation of 227 percent for free films of the Example 1 latex having a relatively higher molecular weight first stage EA/MAA copolymer employed therein.

Examples 3—10

Styrene/butadiene monomer mixture (60/40 ratio) emulsion polymerized in the presence of 49/49/2 weight ratio vinyl acetate/ethyl acrylate/acrylic acid copolymers

In these examples a series of polymerizations are conducted in which a styrene/butadiene or styrene/butadiene/acrylic acid monomer charge is emulsion polymerized in the presence of one of the three different 49/49/2 weight ratio vinyl acetate/ethyl acrylate/acrylic acid (i.e., VAc/EA/AA) copolymer latexes identified in Table I below.

In the preparation of the above-noted VAc/EA/AA copolymer latexes, a monomer charge containing 49 parts vinyl acetate, 49 parts ethyl acrylate and 2 parts acrylic acid (as well as either 0 or 0.5 part of $CHBr_3$) is continuously added over a 3-hour period to an initial aqueous medium containing, per 100 parts monomer charge, about 150 parts water; either 1 or 2 parts of sodium dodecyldiphenyl ether disulfonate; and 0.02 part of the pentasodium salt of diethylenetriaminepentaacetic acid and is polymerized therein at a temperature of 80°C for a total time period of 4 1/2 hours. In addition, an aqueous stream containing, per 100 parts monomer, 40 parts deionized water, 0.1 part sodium hydroxide, 0.5 part sodium persulfate and 0.5 part sodium dodecyldiphenyl ether disulfonate is continuously added over the first 3 1/2 hours of the total 4 1/2-hour polymerization period.

TABLE I
First stage latex identification

| First stage latex | Monomer charge[1] | | | | Initial aqueous medium surfactant[1,2] | Latex pH | Particle size[3] | Solids content (%) |
|---|---|---|---|---|---|---|---|---|
| | VAc[4] | EA[5] | AA[6] | $CHBr_3$ | | | | |
| A | 49 | 49 | 2 | 0 | 1 | 4.7 | 83 | 34.5 |
| B | 49 | 49 | 2 | 0.5 | 1 | 2.4 | 90 | 34.4 |
| C | 49 | 49 | 2 | 0 | 2 | 4.5 | 78,5 | 34.9 |

[1] In parts by weight
[2] Sodium dodecyldiphenyl ether disulfonate
[3] Average diameter in nm (namometer)
[4] VAc=Vinyl Acetate
[5] EA=Ethyl Acrylate
[6] AA=Acrylic Acid

In the second polymerization stage of the instant examples, 80, 85, 90 or 95 parts of a monomer charge of styrene and butadiene or styrene, butadiene and acrylic acid (and, in some cases, also containing $CCl_4$ or $CHBr_3$ as a chain transfer agent) is emulsion polymerized in an aqueous medium containing, respectively, 20, 15, 10 or 5 parts (polymer solids basis) of one of the above-identified first stage latexes (i.e., Latexes A, B or C above) as indicated in Table II below. In such second stage polymerization, the general procedure of the second stage polymerization in Example 1 above is employed except that (a) the water content of the initial aqueous medium is about 112 parts (exclusive of the water content of the first stage latex included therein) instead of 85 parts, (b) the continuously added aqueous stream contains 0.1 part NaOH in Examples 4—10 and 0.05 part NaOH in Example 3 rather than the 0.15 part of Example 1 and (c) naturally the types and amounts of (1) the first stage latex, (2) the second stage monomer charge and (3) the chain transfer agent are as indicated in Table II below rather than as indicated in Example 1 above.

The properties of the latexes resulting from the foregoing polymerizations (and of free films formed therefrom) are summarized in Table III below.

TABLE II
Staged latex recipes

| Example No. | First stage latex | | Second stage monomer charge[2] | | | | |
|---|---|---|---|---|---|---|---|
| | Type | Amount[1] | S[3] | B[4] | AA[5] | $CCl_4$ | $CHBr_3$ |
| 3 | A | 20 | 48 | 32 | — | — | — |
| 4 | B | 20 | 48 | 32 | — | — | — |
| 5 | A | 20 | 46.4 | 32 | 1.6 | — | — |
| 6 | B | 20 | 46.4 | 32 | 1.6 | — | — |
| 7 | B | 20 | 46.4 | 32 | 1.6 | — | 0.8 |
| 8 | C | 10 | 52.2 | 36 | 1.8 | 3.6 | — |
| 9 | C | 5 | 55.1 | 38 | 1.9 | 3.8 | — |
| 10 | C | 15 | 49.3 | 34 | 1.7 | 3.4 | — |

[1] In parts by weight on a polymer solids basis
[2] In parts by weight
[3] S=Styrene
[4] B=Butadiene
[5] AA=Acrylic Acid

TABLE III
Properties of the latexes and free films thereof

| Ex. No. | Latex pH | Part size[1] | Solids content[2] | Min. film forming temp (°C) | Tensile strength[3] | Elong-ation[4] | Modulus @ 100% elong. |
|---|---|---|---|---|---|---|---|
| 3 | 2.5 | 142 | 39.7 | 47.5 | 730 (51.3) | 224 | 415 |
| 4 | 2.6 | 163 | 40.3 | 53 | 942 (66.2) | 200 | 575 |
| 5 | 3.3 | 140 | 40.2 | 51 | 1194 (83.9) | 172 | 799 |
| 6 | 2.3 | 148 | 40.0 | 59 | 1166 (82.0) | 76 | 716 |
| 7 | 2.4 | 144 | 39.6 | 46.5 | 1005 (70.7) | 411 | 263 |
| 8 | 3.0 | 148 | 38.4 | 39 | 1140 (80.1) | 520 | 220 |
| 9 | 2.9 | 188 | 38.2 | 38.5 | 1125 (79.1) | 564 | 210 |
| 10 | 2.9 | 131 | 38.7 | 39.5 | 1262 (88.7) | 487 | 264 |

[1] Average diameter in nm
[2] Weight percent on a total weight basis
[3] In $lbs/in^2$ ($kg/cm^2$)
[4] In percentages

Examples 11—14

Four staged latexes having the recipes set forth in Table IV below are prepared pursuant to the polymerization procedure of Examples 3—10 above except that (a) the first stage monomer addition and polymerization is conducted over a shortened period of only 1/2 hour and (b) the addition of the second stage monomer charge is commenced immediately at the end of such 1/2-hour period (i.e., without any intermediate "cookdown" for the first stage polymer) and is accomplished over a 4 1/2- (rather than 5-) hour period. In addition, only a single sodium persulfate-containing aqueous stream is employed (i.e., rather than one such addition for each polymerization stage) and the addition thereof is continuous (and at a uniform rate) over the entire 6-hour polymerization period employed (i.e., 1/2 hour for the first stage polymerization, 4 1/2 hours for the second stage monomer addition and polymerization plus a one-hour "cookdown" period at the end of the second stage monomer addition).

The properties of the latexes resulting from the foregoing polymerization (and of free films formed therefrom) are summarized in Table V below.

TABLE IV
Staged latex recipes

| Example No. | First stage monomer charge* | | | | Second stage monomer charge* | | | | |
|---|---|---|---|---|---|---|---|---|---|
| | EA[1] | VAc[2] | AA[3] | Total | S[4] | B[5] | AA[3] | $(CCl_4)$[6] | Total |
| 11[7] | 4.9 | 4.9 | 0.2 | 10 | 52.2 | 36 | 1.8 | 3.6 | 90 |
| 12[8] | 9.8 | 9.8 | 0.4 | 20 | 46.4 | 32 | 1.6 | 3.2 | 80 |
| 13[8] | 4.9 | 4.9 | 0.2 | 10 | 52.2 | 36 | 1.8 | 3.6 | 90 |
| 14[7] | 9.8 | 9.8 | 0.4 | 20 | 46.4 | 32 | 1.6 | 3.2 | 80 |

* In parts by weight
[1] EA=Ethyl Acrylate
[2] VAc=Vinyl Acetate
[3] AA=Acrylic Acid
[4] S=Styrene
[5] B=Butadiene
[6] Carbon tetrachloride as chain transfer agent
[7] Sodium dodecyldiphenyl ether disulfonate surfactant usage is 0.5 part in initial aqueous medium and 0.7 part in the continuously added aqueous stream.
[8] Sodium dodecyldiphenyl ether disulfonate surfactant usage is 0.1 part in initial aqueous medium and 0.7 part in the continuously added aqueous stream.

TABLE V
Latex and free film properties

| Ex. No. | Latex pH | Part size[1] | Solids content[2] | Min. film forming temp (°C) | Tensile strength[3] | Elongation[4] | Modulus @ 100% Elong. |
|---|---|---|---|---|---|---|---|
| 11 | 3.1 | 119 | 38.1 | 41 | 1119 (78.7) | 489 | 242 |
| 12 | 3.3 | 163 | 38.6 | 38.5 | 1618 (113.7) | 330 | 534 |
| 13 | 3.3 | 142 | 36.8 | 39.5 | 1055 (74.2) | 558 | 203 |
| 14 | 3.2 | 144 | 37.1 | — | — | — | — |

[1] Average diameter in nm
[2] Weight percent on a total weight basis
[3] In $lb/in^2$ ($kg/cm^2$)
[4] In percentages

Examples 15—23
Paper coating compositions employing latexes of Examples 5—10 and 11—13 as a binder component therein

Twenty parts (polymer solids basis) of each of the above-described latexes of Examples 5—10 and 11—13 are admixed with 100 parts of No. 1 clay to form a paper coating composition and the pH thereof is adjusted to a value of 8 with sodium hydroxide. Thereafter, the viscosity of the resulting paper coating compositions is determined at various total solids levels. In addition, the paper coating performance of the resulting compositions is evaluated by coating a general purpose base-stock therewith using a conventional laboratory scale bench blade coater; calendering the resulting coated paper for four nips at 3.26 MPa per linear cm (1200 pounds per linear inch) and 150°C and thereafter determining the 75° gloss, brightness and K & N ink receptivity thereof in the usual fashion.

The results of the aforementioned paper coating composition evaluations are summarized in Table VI below. In addition, the aforementioned coated papers are also evaluated for coating smoothness in terms of the Heliotest printability thereof and are found to possess very good coating smoothness pursuant thereto.

TABLE VI
Paper coating performance evaluation for Examples 5—10 and 11—13 latexes

| Paper coating property | Example number | | | | | | | | |
|---|---|---|---|---|---|---|---|---|---|
| | 15 | 16 | 17 | 18 | 19 | 20 | 21 | 22 | 23 |
| Latex employed | Ex. 5 | Ex. 6 | Ex. 7 | Ex. 8 | Ex. 9 | Ex. 10 | Ex. 11 | Ex. 12 | Ex. 13 |
| Coating composition viscosity:[1] | | | | | | | | | |
| —@ 62% solids | 3050 | 9600 | 8800 | — | — | — | — | — | — |
| —@ 59% solids | — | — | — | 3100 | 3100 | 3700 | 1250 | 1250 | 1250 |
| —@ 55% solids | 1100 | 4800 | 5000 | 750 | 900 | 850 | 450 | 425 | 425 |
| Coating weight[2] | 5.4 (8.0) | 6.0 (8.9) | 6.0 (8.9) | 5.7 (8.4) | 5.0 (7.4) | 4.8 (7.1) | 4.7 (7.0) | 4.6 (6.8) | 4.8 (7.1) |
| 75° Gloss[3] | 75 | 76 | 80 | 74 | 75 | 73 | 73 | 71 | 74 |
| Brightness | | | | | | | | | |
| —Initial (%) | 78.3 | 78.7 | 78.4 | 79.4 | 79.4 | 79.8 | 80.0 | 79.3 | 79.2 |
| —After K&N ink, % | 65.0 | 63.8 | 65.7 | 65.5 | 65.0 | 66.8 | 68.2 | 65.3 | 66.7 |
| —% Drop | 17.0 | 18.9 | 16.2 | 17.5 | 18.1 | 16.3 | 14.8 | 18.2 | 15.8 |

[1] In m Pa · s as measured at 20 rpm using a Brookfield viscometer
[2] In pounds per book ream ($g/m^2$)
[3] Measured using a glossimeter after 4 calendar nips at 1200 pli (215 kg/linear cm) and at 150°F (65,6°C).

Examples 24—27

Styrene/butadiene monomer mixture emulsion polymerized in the presence of a copolymer latex of ethyl acrylate (or ethyl acrylate and acrylic acid) with N-methylolacrylamide, glycidyl methacrylate or acrolein

A series of four latexes are prepared as indicated in Table VII below by emulsion polymerizing a 60/40 weight ratio styrene/butadiene second stage monomer charge in the presence of a first stage copolymer latex of ethyl acrylate (or ethyl acrylate and acrylic acid) and a curable (i.e., cross-linkable) monomer species selected from N-methylolacrylamide, glycidyl methacrylate or acrolein. In such fashion, copolymer latexes composed predominantly of styrene and butadiene are provided which are modified with functional or curable monomers which are not readily copolymerizable with styrene and butadiene.

TABLE VII

Latex recipes for Examples 24—27

| Example No. | First stage monomer charge | | | | | Second stage monomer charge* | |
|---|---|---|---|---|---|---|---|
| | EA[1] | AA[2] | N-MA[3] | GMA[4] | Acrolein | S[5] | B[6] |
| 24 | 9 | 0.5 | 0.5 | — | — | 54 | 36 |
| 25 | 18 | 1.0 | 1.0 | — | — | 48 | 32 |
| 26 | 9 | — | — | 1.0 | — | 54 | 36 |
| 27 | 9 | — | — | — | 1.0 | 54 | 36 |

* In parts by weight
[1] EA=Ethyl Acrylate
[2] AA=Acrylic Acid
[3] N-MA=N-Methylolacrylamide
[4] GMA=Glycidyl Methacrylate
[5] S=Styrene
[6] B=Butadiene

In the preparation of the foregoing latexes, the general procedure of Examples 11—14 above is employed except that (a) the first stage monomer feed and polymerization period is 45 minutes rather than 1/2 hour, (b) the second stage monomer charge is continuously added over a 3.6- (rather than 4.5-) hour period, (c) the continuously added aqueous stream contains about 0.6 part $NaHCO_3$ (rather than 0.1 part NaOH) for pH control, (d) the polymerization is conducted at a temperature of 80°C (rather than 90°C) and the "cookdown" period following completion of the aqueous stream is 1 1/2 hours (rather than 1 hour) and (e) the initial aqueous sodium contains about 150 (rather than 112) parts water and 0.02 (rather than 0.01) part of the pentasodium salt of diethylenetriaminepentaacetic acid.

Following their preparation in the foregoing fashion, the resulting latexes are employed to form free films under various drying/curing conditions and the films thereby obtained are evaluated in terms of the tensile strength and elongation thereof. The properties of the resulting films are summarized in Table VIII below.

TABLE VIII

Latex properties for Examples 24—27

| Property | Latex | | | |
|---|---|---|---|---|
| | Example No. 24 | Example No. 25 | Example No. 26 | Example No. 27 |
| Latex pH* | 8.0 | 8.0 | 9.0 | 9.0 |
| Particle size | 121 nm | 117,5 nm | 127 nm | 103 nm |
| Solids content (%)[1] | 34.9 | 34.2 | 34.9 | 34.6 |

| | | | | | |
|---|---|---|---|---|---|
| Room temp. Drying | W/O $NH_4Cl$[3] | W/O $NH_4Cl$[3] | W/ $NH_4Cl$[4] | W/ $NH_4Cl$[4] | W/ $NH_4Cl$[4] |
| Tensile strength[2] | 668 (47.0) | 606 (42.6) | 413 (29.0) | 239 (16.8) | 1142 (80.3) |
| Elongation (%) | 360 | 320 | 320 | 240 | 327 |

TABLE VIII (contd.)

| Property | Latex<br>Example No. 24 | Example No. 25 | Example No. 26 | Example No. 27 | |
|---|---|---|---|---|---|
| 3 Min. @ 200°F | | | | | |
| Tensile strength[2] | 922 (64.8) | 660 (46.4) | 646 (45.4) | 671 (47.2) | 1451 (102.0) |
| Elongation (%) | 404 | 316 | 312 | 355 | 355 |
| 3 Min. @ 250°F (121°C) | | | | | |
| Tensile strength[2] | 1037 (72.9) | 767 (53.9) | 853 (60.0) | 751 (52.8) | 1391 (97.8) |
| Elongation (%) | 410 | 350 | 345 | 376 | 335 |
| 3 Min. @ 300°F (149°C) | | | | | |
| Tensile strength[2] | 1227 (86.3) | 920 (64.7) | 1080 (75.9) | 1422 (100.0) | 2303 (161.9) |
| Elongation (%) | 435 | 350 | 333 | 490 | 395 |

* Latex pH after steam stripping and pH adjustment with aqueous alkaline solutions
[1] Total weight basis
[2] $lb/in^2$ ($kg/cm^2$)
[3] Without any $NH_4Cl$ added as an acid catalyst
[4] With 1 part by weight $NH_4Cl$ added as an acid catalyst

**Claims**

1. A process for preparing an aqueous copolymer latex of colloidally dispersed, substantially spheroidal, heterogeneous copolymer particles by
(A) first preparing an initial aqueous latex of a substantially linear hydrophilic polymer by emulsion polymerizing an initial monomer charge comprising (1) one or more vinyl esters of a non-addition polymerizable carboxylic acid and/or one or more esters of an addition polymerizable carboxylic acid and (2) one or more relatively hydrophilic comonomers having a solubility in water of at least 3 weight percent on a total weight basis at 25°C with the proviso that when the monomer component (A(1) is exclusively vinyl acetate comonomer (2) can be eliminated; and
(B) thereafter emulsion polymerizing, in the presence of the initial hydrophilic polymer latex of stage (A) a second relatively hydrophobic monomer charge, characterized in that
(a) in stage (A) the relatively hydrophilic comonomers are used in an amount which renders the copolymer of said initial latex sufficiently hydrophilic that it ultimately becomes preferentially oriented towards the outer surface of the finished copolymer particles of the final copolymer latex product,
(b) the polymerization is performed in both polymerization stages (A) and (B) at a pH from 2 to 6,
(c) in polymerization stage (B) from 5 to 50 parts by weight on a polymer solids basis of the initial hydrophilic polymer latex of stage (A) and from 50 to 95 parts by weight of the relatively hydrophobic monomer charge is used,

thus obtaining copolymer particles which are individually composed of a relatively hydrophobic polymer core portion having a relatively hydrophilic polymeric portion preferentially oriented toward the outer surface thereof.

2. The process of claim 1 wherein the monomer charge in (B) comprises, based upon the weight thereof, (1) from 20 to 75 weight percent of a monovinylidene monomer selected from monovinylidene aromatic monomers and vinylidene halide monomers, (2) from 25 to 80 weight percent of the aliphatic conjugated diene monomer, and (3) from 0 to 10 weight percent of a monoethylenically unsaturated carboxylic acid.

3. The process of Claim 2 wherein the monomer charge in (B) comprises from 0 to 5 weight percent of a monoethylenically unsaturated carboxylic acid monomer.

4. The process of Claim 1 wherein the monomer charge in step (A) contains as the hydrophilic

monomer from 1 to 50 weight percent based on the weight of initial monomer of a monoethylenically unsaturated carboxylic acid.

5. The process of Claim 1 wherein the initial monomer charge in (A) comprises based on total weight of monomer from 70 to 99 weight percent of one or more vinyl esters of nonaddition polymerizable carboxylic acids and/or one or more saturated aliphatic or aromatic alcohol esters of a monoethylenically unsaturated carboxylic acid and (2) from 1 to 30 weight percent of a monoethylenically unsaturated carboxylic acid monomer.

6. The process of Claim 1 wherein the monomer charge in step (A) further comprises, based on total weight of monomer from 0.5 to 20 weight percent of a monomer providing reactive sites for subsequent curing or cross-linking selected from the group consisting of N-methylol acrylamide or methacrylamide, N-isobutoxymethyl acrylamide or methacrylamide, glycidyl acrylate or methacrylate, acrolein or methacrolein, and isopropenyl oxazoline.

7. The process of Claim 1 wherein the weight ratio of the monomer charge in step (A) to the monomer charge in step (B) is 5:95 to 20:80.

8. The process of Claim 7 wherein the monomer charge in step (A) comprises, based on total monomer weight from 70 to 99 weight percent of a vinyl ester of a $C_1$ to $C_6$ alkanoic acid or a $C_1$ to $C_3$ alkyl ester of acrylic acid, and from 1 to 30 weight percent of the monoethylenically unsaturated carboxylic acid monomer.

9. An aqueous copolymer latex prepared by the process of Claims 1—8.

**Patentansprüche**

1. Verfahren zum Herstellen eines wässerigen, kolloidal dispergierten Copolymerlatex mit im wesentlichen kugeligen heterogenen Copolymerteilchen durch

(A) als erstes Herstellen eines wässerigen Ausgangslatex eines im wesentlichen linearen hydrophilen Polymers durch Emulsionspolymerisation einer Ausgangsmonomer-charge enthaltend
  (1) ein oder mahrere Vinylester einer nicht additionspolymerisierbaren Carbonsäure und/oder ein oder mehrere Ester einer additionspolymerisierbaren Carbonsäure und
  (2) ein oder mehrere relativ hydrophile Comonomere, die bei 25° C eine Löslichkeit in Wasser von mindestens 3 Gew.% bezogen auf Gesamtgewicht aufweisen, mit der Bedingung, daß, wenn die Monomerkomponente (A) (1) ausschließlich Vinylacetatcomonomer ist, auf (2) verzichtet werden kann, und

(B) anschließende Emulsionspolymerisation einer zweiten relativ hydrophoben Monomercharge in Anwesenheit des hydrophilen Ausgangspolymerlatex der Stufe (A), dadurch gekennzeichnet, daß
  (a) in Stufe (A) die relativ hydrophilen Comonomeren in solchen Mengen verwendet werden, daß das Copolymere des Ausgangslatex ausreichend hydrophil wird, so daß es sich schließlich vorzugsweise zur Außenoberfläche der endgültigen Copolymerteilchen des Endcopolymerlatex hin orientiert,
  (b) die Polymerisation in den beiden Polymerisationsstufen bei einem pH-Wert von 2 bis 6 ausgeführt wird,
  (c) in der Polymerisationsstufe (B) von 5 bis 50 Gew.Tl. bezogen auf Polymerfeststoffe des hydrophilen Ausgangspolymerlatex von Stufe A und von 5 bis 95 Gew.Tl. einer relativ hydrophoben Monomercharge verwendet werden,

so daß Copolymerteilchen erhalten werden, die individuell zusammengesetzt sind aus einem relativ hydrophoben Kernteil mit einem relativ hydrophilen Polymeranteil, der vorzugsweise zur Außenoberfläche hin orientiert ist.

2. Verfahren nach Anspruch 1, dadurch gekennzeichnet, daß die Monomercharge in (B) bezogen auf ihr Gewicht enthält,

(1) von 20 bis 75 Gew.% eines Monovinyliden-Monomeren von monovinylidenaromatischen Monomeren und Vinylidene-Halogen-Monomeren,
(2) von 25 bis 80 Gew.% eines aliphatischen konjugierten Dienmonomeren und
(3) von 0 bis 10 Gew.% einer monoethylenisch ungesättigten Carbonsäure.

3. Verfahren nach Anspruch 2, dadurch gekennzeichnet, daß die Monomercharge in (B) von 0 bis 5 Gew.% eines monoethylenisch ungesättigten Carbonsäuremonomeren enthält.

4. Verfahren nach Anspruch 1, dadurch gekennzeichnet, daß die Monomercharge in Stufe (A) als hydrophiles Monomer von 1 bis 50 Gew.% bezogen auf Gewicht Ausgangsmonomer, einer monoethylenisch ungesättigten Carbonsäure enthält.

5. Verfahren nach Anspruch 1, dadurch gekennzeichnet, daß die Ausgangsmonomercharge in (A) bezogen auf Gesamtgewicht der Monomeren enthält, von 70 bis 99 Gew.% eines oder mehrerer Vinylester einer nicht additionspolymerisierbaren Carbonsäure und/oder ein oder mehrere gesättigte aliphatische

oder aromatische Alkoholester einer monoethylenisch ungesättigten Carbonsäure und (2) von 1 bis 30 Gew.% eines monoethylenisch ungesättigten Carbonsäuremonomeren.

6. Verfahren nach Anspruch 1, dadurch gekennzeichnet, daß die Monomercharge in Stufe (A) bezogen auf Gesamtgewicht der Monomeren ferner enthält, von 0,5 bis 20 Gew.% eines Monomeren, das reaktive Seitengruppen für anschließende Härtung oder Vernetzung erzeugt, aus der Gruppe bestehend aus N-Methylolacrylamid oder -Methacrylamid, N-Isobutoxymethylacrylamid oder -Methacrylamid, Glycidylacrylat oder -Methacrylat, Acrolein oder Methacrolein und Isopropenyloxazolin.

7. Verfahren nach Anspruch 1, dadurch gekennzeichnet, daß das Gewichtsverhältnis von Monomercharge in Stufe (A) zu Monomercharge in Stufe (B) 5:95 bis 20:80 beträgt.

8. Verfahren nach Anspruch 7, dadurch gekennzeichnet, daß die Monomercharge in Stufe (A) bezogen auf Gesamtgewicht der Monomeren enthält, von 70 bis 99 Gew.% eines Vinylesters einer $C_1$ bis $C_6$ Alkancarbonsäure oder ein $C_1$ bis $C_3$ Alkylester von Acrylsäure und von 1 bis 30 Gew.% monoethylenisch ungesättigtes Carbonsäuremonomer.

9. Wässeriger Copolymerlatex hergestellt nach dem Verfahren der Ansprüche 1 bis 8.

**Revendications**

1. Procédé de préparation d'un latex aqueux de copolymère à particules de copolymère hétérogène, pratiquement sphéroïdales, en dispersion colloïdale qui consiste

(A) d'abord à préparer un latex aqueous de départ à base d'un polymère pratiquement linéaire, hydrophile, par une polymérisation en émulsion d'une charge initiale de monomère comprenant (1) un ou plusieurs esters vinyliques d'un acide carboxylique non polymérisable par addition et/ou un ou plusieurs esters d'un acide carboxylique polymérisable par addition et (2) un ou plusieurs comonomères relativement hydrophiles possédant une solubilité dans l'eau d'au moins 3 pour cent en poids sur une base de poids total, à 25°C avec la condition que lorsque le constituant monomère (A) (1) est exclusivement un comonomère d'acétate de vinyle, (2) peut être supprimé; et

(B) ensuite à polymériser en émulsion, en présence du latex de départ à base du polymère hydrophile de l'étape (A), une seconde charge de monomère relativement hydrophobe, caractérisé en ce que

(a) dans l'étape (A), on utilise les comonomères relativement hydrophiles en une quantité qui rende le copolymère dudit latex de départ suffisamment hydrophile pour qu'il devienne à la fin orienté de manière préférentielle vers la surface externe des particules finies de copolymère du latex final de copolymère,

(b) la polymérisation est effectuée dans les deux étapes de polymérisation (A) et (B) à un pH de 2 à 6,

(c) dans l'étape de polymérisation (B), on utilise de 5 à 50 parties en poids, sur une base de matières solides polymères, du latex de départ à base de polymère hydrophile de l'étape (A) et de 50 à 95 parties en poids de la charge de monomère relativement hydrophobe, ce qui permet ainsi d'obtenir des particules de copolymère qui sont individuellement constituées d'une partie centrale en polymère relativement hydrophobe possédant une portion polymère relativement hydrophile orientèe préférentiellement vers sa surface externe.

2. Procédé selon la revendication 1, caractérisé en ce que la charge de monomère dans (B) comprend, par rapport au poids de celle-ci, (1) de 20 à 75 pour cent en poids d'un monomère de monovinylidène choisi parmi des monomères aromatiques de monovinylidène et des monomères d'halogénure de vinylidène, (2) de 25 à 80 pour cent en poids de monomère de diène conjugué aliphatique, et (3) de 0 à 10 pour cent en poids d'un acide carboxylique monoéthyléniquement insaturé.

3. Procédé selon la revendication 2, caractérisé en ce que la charge de monomère dans (B) comprend de 0 à 5 pour cent en poids d'un monomère d'acide carboxylique monoéthyléniquement insaturé.

4. Procédé selon la revendication 1, caractérisé en ce que la charge de monomère dans l'étape (A) contient, à titre de monomère hydrophile, de 1 à 50 pour cent en poids, par rapport au poids du monomère de départ, d'un acide carboxylique monoéthyléniquement insaturé.

5. Procédé selon la revendication 1, caractérisé en ce que la charge initiale de monomère dans (A) comprend, par rapport au poids total de monomère, de 70 à 99 pour cent en poids d'un ou plusieurs esters vinyliques d'acides carboxyliques non polymérisables par addition et/ou un ou plusieurs esters d'alcool aromatique ou aliphatique saturé et d'un acide carboxylique monoéthyléniquement insaturé et (2) de 1 à 30 pour cent en poids d'un monomère d'acide carboxylique monoéthyléniquement insaturé.

6. Procédé selon la revendication 1, caractérisé en ce que la charge de monomère dans l'étape (A) comprend en outre, par rapport au poids total de monomère, de 0,5 à 20 pour cent en poids d'un monomère fournissant des sites réactifs pour la cuisson ou la réticulation ultérieure, qui est choisi dans le groupe comprennant le (N-hydroxyméthyl)-acrylamide ou -méthacrylamide, le (N-isobutoxyméthyl)-acrylamide ou -méthacrylamide, l'acrylate ou le méthacrylate de glycidyle, l'acroléine ou l'aldéhyde méthacrylique et l'isopropényl-oxazoline.

7. Procédé selon la revendication 1, caractérisé en ce que le rapport pondéral de la charge de monomère dans l'étape (A) à la charge de monomère dans l'étape (B) est de 5:95 à 20:80.

8. Procédé selon la revendication 7, caractérisé en ce que la charge de monomère dans l'étape (A) comprend, par rapport au poids total de monomère, de 70 à 99 pour cent en poids d'un ester vinylique d'un

acide alcanoïque en $C_1$ à $C_6$ ou d'un ester alkylique en $C_1$ à $C_3$ de l'acide acrylique, et de 1 à 30 pour cent en poids du monomère de l'acide carboxylique monoéthyléniquement insaturé.

9. Latex aqueux de copolymère préparé selon le procédé des revendications 1—8.